# FASCICULE DE BREVET EUROPEEN

(11) **EP 4 045 769 B1**
(45) Date de publication et mention de la délivrance du brevet: **04.09.2024**
(21) Numéro de dépôt: 20801337.5
(22) Date de dépôt: 14.10.2020
(51) Int. Cl.: F01D 13/02, B64D 35/04, F02C 6/00, F02K 3/12, B64D 27/10, F02C 7/00, F02K 3/02, F02C 3/10, F02C 6/04, F02C 6/06, F02C 6/08, F02K 5/00

(54) **PROPULSION DISTRIBUÉE À MODULES PROPULSIFS DÉPORTÉS**
VERTEILTER ANTRIEB MIT VERSETZTEN ANTRIEBSMODULEN
DISTRIBUTED PROPULSION WIITH OFFSET PROPULSION MODULES

(30) Priorité: 15.10.2019 FR 1911489
(43) Date de publication de la demande: 24.08.2022
(73) Titulaire: Institut Supérieur de L'aéronautique Et de L'espace, 31400 Toulouse (FR); SAFRAN, 75015 Paris (FR); SAFRAN AIRCRAFT ENGINES, 75015 Paris (FR)
(72) Inventeur: GONIDEC, Patrick, 77550 MOISSY-CRAMAYEL (FR); AGUIRRE, Miguel Angel, 77550 MOISSY-CRAMAYEL (FR); DUPLAA, Sébastien, 31450 POMPERTUZAT (FR); ROBIC, Bernard, 77550 MOISSY-CRAMAYEL (FR); RODRIGUEZ, Benoit, 77550 MOISSY-CRAMAYEL (FR); TANTOT, Nicolas Jérôme Jean, 77550 MOISSY-CRAMAYEL (FR)
(74) Mandataire: Regimbeau
(86) Numéro de dépôt international: PCT/FR2020/051812
(87) Numéro de publication internationale: WO 2021/074521

(56) Documents cités:
- GB-A- 1 545 365
- US-A- 3 442 082
- US-A1- 2005 211 822

## Description

### DOMAINE TECHNIQUE GENERAL

L'invention concerne le domaine des ensembles propulsifs en aéronautique et en particulier la propulsion distribuée.

La propulsion distribuée consiste à avoir un générateur de puissance à un endroit de l'avion et de transmettre cette puissance à une pluralité d'organes créateurs d'effort propulsif répartis à divers endroits dans l'avion.

En particulier cette configuration permet de répartir la poussée sur plusieurs soufflantes (« fans » en terminologie anglo-saxonne) menées par un même générateur et de constituer ainsi un groupe propulsif à fort taux de dilution (16:1 voire 30:1 et au-delà) tout en gardant des soufflantes de taille individuelle intégrable à l'avion. De plus, cette distribution de la poussée permet des topologies d'arrangements géométriques et aérodynamiques minimisant les variations d'énergie sur l'ensemble aéronef/système propulsif, options généralement impossibles à envisager avec des ensembles propulsifs conventionnels où chaque générateur ne mène qu'une seule soufflante.

Le problème posé est donc de transférer une grande puissance (10 à 60 MW) d'un générateur de puissance (souvent générateur de gaz) vers des soufflantes qui lui sont plus ou moins éloignées sur l'avion.

### ETAT DE L'ART

L'état de l'art actuel distingue deux types de propulsions distribuées.

La propulsion distribuée « courte » où le moteur mène plusieurs soufflantes mais où ces dernières lui restent proches (par proche on entend que la distance entre l'axe du moteur et l'axe des soufflantes est inférieur à trois fois le diamètre de la soufflante) et la propulsion distribuée « longue » où les soufflantes sont éloignées (par éloigné, on entend que la distance précédente est supérieure à trois fois le diamètre de la soufflante) de leur générateur de puissance.

Deux technologies de transmission de puissance ont déjà été utilisées :
- la transmission mécanique (arbre, engrenages divers) : en raison des contraintes de dynamique d'ensemble, de souplesse/rigidité, et de masse, ce mode de transmission est réservé quasiment exclusivement à une propulsion distribuée courte,
- la transmission électrique (générateur électrique attelé au générateur de gaz, convertisseurs électriques, câbles électriques, moteur électrique attelé à chaque soufflante) : cette configuration nécessite des technologies de pointe pour réduire les pertes par effet Joule dans les câbles d'alimentation des moteurs de soufflantes mais aussi dans les câblages même des moteurs et des alternateurs nécessaires à une propulsion distribuée longue ; de plus, il faut parvenir à garder une masse dans des proportions raisonnables. La compétitivité d'une telle transmission électrique est également conditionnée par la disponibilité d'équipements à forte densité de puissance (typiquement supérieure à 250 kW/kg).

Ces deux solutions présentent des difficultés (lubrification, complexité mécanique, ajustement et précision ; pertes par effet Joule, tension, poids).

Une troisième solution a été investiguée de manière préliminaire : elle consiste à alimenter en air comprimé par un seul générateur de gaz une ou plusieurs turbines attelées chacune à une seule soufflante.

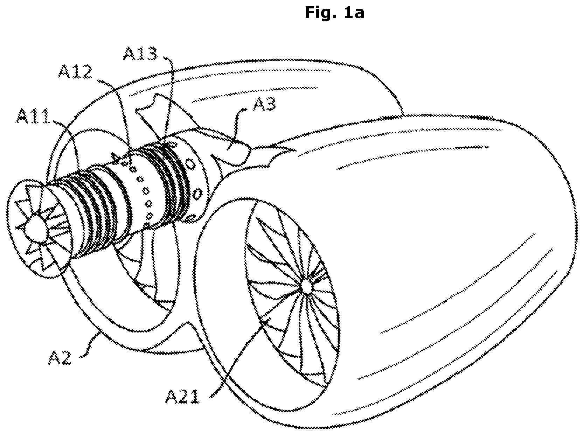

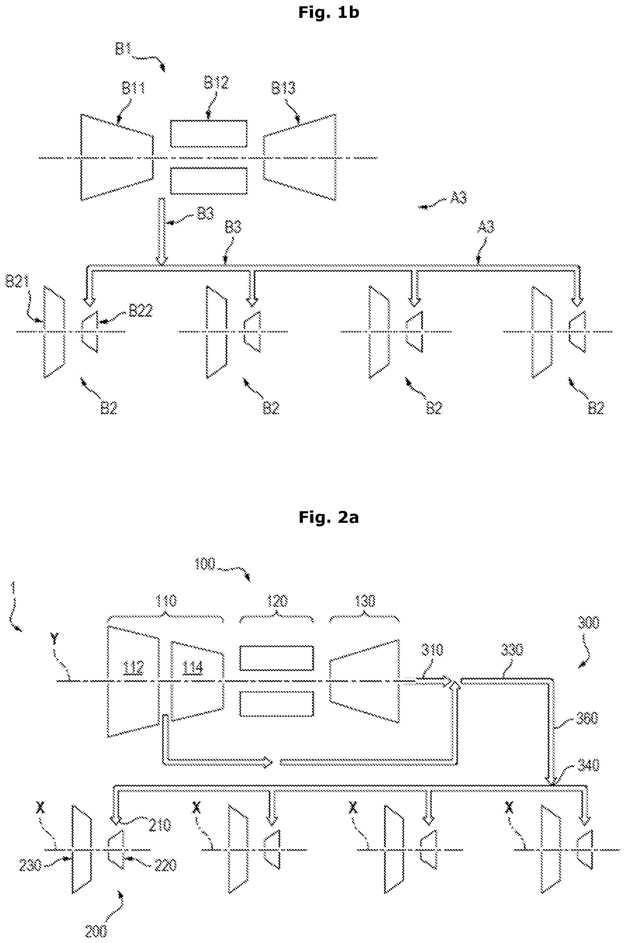

Il en existe aujourd'hui deux variantes, illustrées par les **figures 1a** **et** **1b****.**

En **figure 1a****,** un générateur A1 comprend classiquement un compresseur A11, une chambre de combustion A12 et une turbine A13 (entraînant le compresseur A11 par le biais d'un arbre de liaison mécanique). Le générateur A1 alimente deux modules propulsifs A2 alimentés par le flux d'air sortant de la turbine A13. Le module propulsif A2 comprend une soufflante A21, entraînée en rotation par une turbine d'entrainement (via un arbre), qui est elle-même entraînée par ce flux d'air. La turbine d'entrainement est une turbine liée à l'extrémité radiale de la soufflante A21 (« *tip turbine* »). Il y a peu de perte de charge dans la tuyauterie A3 (du fait de la proximité du générateur et des soufflantes) qui relie la turbine A13 à la turbine d'entrainement du module propulsif A2, mais cela limite pratiquement l'intégration à un montage arrière sur avion à fuselage à section doublement elliptique dit « double bulles ». De plus, les gaz d'échappements sont très chauds (plus de 1100K en température pic rencontrée sur l'ensemble des conditions de fonctionnement), ce qui nécessite des matériaux et des dispositifs spécifiques, coûteuses (même la céramique Oxyde/Oxyde devient peu utilisable), toléré ici car peu de quantité est nécessaire pour la tuyauterie A3 qui est très courte.

En **figure 1b****,** un générateur B1 comprend classiquement un compresseur B11, une chambre de combustion B12 et une turbine B13 (entraînant le compresseur par le biais d'un arbre de liaison mécanique). Une pluralité de modules propulsifs B2 est déportée. Ici, le flux d'air est intégralement prélevé à l'entrée de la chambre de combustion B12, en sortie du compresseur B11 puis envoyé vers les turbines d'entrainement B22 des modules propulsifs B2, qui entraînent les soufflantes B21. Toutefois, les pressions impliquées (environ 50 bars (5000000 Pa), à une température de 1000K environ), outre le fait qu'elles nécessitent des matériaux adaptés qui sont lourds, nécessitent l'utilisation de petits tuyaux B3, limitant le débit individuel acheminable dans chaque tuyau, ce qui signifie que ce système est utilisable uniquement pour une multitude de petites soufflantes.

US2005211822 A1 divulgue un système de propulsion à cycle variable pour un avion supersonique, le système comprenant au moins un moteur avec des moyens de production de gaz d'échappement et une tuyère d'échappement de gaz pour générer une poussée pour des vitesses de vol supersoniques, et au moins un ensemble de propulsion auxiliaire séparé dissocié dudit moteur, n'ayant pas de générateur de gaz, et capable de générer une poussée pour le décollage, l'atterrissage, et des vitesses de vol subsoniques. US3442082 A divulgue un système de propulsion comprenant un générateur de gaz à turbine et l'utilisation de gaz sous pression dans la propulsion de moyens de travail supplémentaires qui comprennent en particulier la propulsion par flux d'air supplémentaire.

### PRESENTATION DE L'INVENTION

A cet égard, l'invention propose dans un premier aspect un groupe propulsif comprenant :
- une génératrice de gaz comprenant :
   *un compresseur,
   *une chambre de combustion, configurée pour recevoir de l'air comprimé par le compresseur,
   *une turbine, configurée pour entraîner en rotation le compresseur à l'aide des gaz issus de la chambre de combustion,
- au moins deux modules propulsifs à air comprimé, chaque module propulsif comprenant :
   *une soufflante,
   *une turbine à air comprimé, configurée pour entraîner en rotation la soufflante,
- un collecteur permettant d'alimenter en air comprimé les turbines respectives des modules propulsifs à air comprimé,
dans lequel le collecteur est configuré pour récupérer et mélanger au moins une portion du flux ayant traversé la chambre de combustion de la génératrice de gaz, typiquement en sortie de turbine, et au moins un flux dérivé, ledit flux dérivé étant un flux d'air qui n'a pas traversé la chambre de combustion de la génératrice de gaz, et le collecteur ou les modules propulsifs comprennent des moyens de contrôle de débit pour contrôler l'alimentation respective des modules propulsifs en air comprimé.

Grâce à ce mélange des flux, la température de l'air comprimé est baissée par rapport à la technologie de la **figure 1a****,** ce qui autorise un éloignement plus important des modules propulsifs. Le coût des matériaux des conduites d'acheminement et des modules propulsifs et leur poids baissent aussi. Par rapport à la technologie de la **figure 1b****,** les pressions impliquées sont nettement plus basses, ce qui autorise des conduites plus larges et moins épaisses (pour le matériau), et donc une utilisation sur des modules propulsifs de taille individuelle plus élevée grâce à une baisse de la masse des conduites et une meilleure optimisation des turbines attelées à la soufflante.

La génératrice de gaz comprend un axe longitudinal correspondant à un axe de rotation de la turbine et chaque module propulsif comprend un axe longitudinal correspondant à un axe de rotation de la turbine à air comprimé. Du fait qu'il s'agit d'un groupe propulsif dit « déporté », l'axe longitudinal de la génératrice de gaz et celui d'au moins un module propulsif ne sont pas confondus. Avantageusement, aucun de ces axes n'est confondu avec celui de la génératrice de gaz.

Dans un mode de réalisation, le collecteur récupère quasiment l'intégralité ou l'intégralité du flux traversant la turbine de la génératrice de gaz. Cela permet d'optimiser le rendement.

Dans un mode de réalisation, le collecteur permet de mélanger un flux ayant traversé la turbine du générateur de gaz et un flux dérivé (dit « bypass » ou « flux de contournement ») au niveau du compresseur de la génératrice de gaz. Cela permet d'homogénéiser plus facilement les pressions pour le mélange de flux.

Préférablement, le flux dérivé est prélevé à un étage du compresseur présentant une pression équivalente à la pression en sortie de turbine.

La turbine entraîne le compresseur en rotation via un arbre mécanique.

Dans un mode de réalisation, la génératrice de gaz est monocorps, c'est-à-dire qu'elle ne comprend qu'un corps tournant de compresseur et turbine.

Dans un mode de réalisation, la génératrice de gaz est une turbomachine double corps dans lequel le compresseur comprend un compresseur basse pression et un compresseur haute pression, dans lequel le flux dérivé est prélevé entre les deux compresseurs.

Dans un mode de réalisation, la génératrice de gaz est une turbomachine double flux comprenant une soufflante en aval de laquelle se trouvent une veine secondaire et une veine primaire, la veine primaire intégrant le compresseur, la chambre de combustion et la turbine, dans laquelle le flux dérivé est prélevé dans la veine secondaire.

Dans un mode de réalisation, la génératrice de gaz est une turbomachine double flux double corps dans laquelle le compresseur comprend un compresseur basse pression et un compresseur haute pression, et dans laquelle une veine secondaire et une veine primaire sont définies en aval du compresseur basse pression, la veine primaire intégrant la chambre de combustion et la turbine, dans laquelle le flux dérivé est prélevé dans la veine secondaire.

Dans un mode de réalisation, le flux dérivé est un flux directement issu de l'air libre.

Avantageusement, afin que l'air apporté au module propulsif soit comprimé, la turbine est configurée pour détendre l'air en sortie à une pression supérieure à 4 bars (400000 Pa), et préférablement comprise entre 4 et 8 bars (400000 - 800000 Pa).

Dans un mode de réalisation, la turbine à air comprimé du module propulsif est une turbine à alimentation radiale, préférablement centripète.

Le collecteur ou les modules propulsifs comprennent des moyens de contrôle de débit, tels que des vannes, des distributeurs à calage variable ou à géométrie variable, pour contrôler l'alimentation respective des modules propulsifs en air comprimé.

L'invention concerne aussi, selon ce premier aspect, un ensemble comprenant deux groupes propulsifs tel que décrit précédemment, et une conduite de croisement, ladite canalisation interconnectant pneumatiquement les deux collecteurs afin que la génératrice à gaz du premier groupe propulsif, respectivement le deuxième, puisse alimenter en air comprimé au moins un module propulsif du deuxième groupe propulsif, respectivement le premier.

Préférablement, chaque génératrice d'un groupe propulsif peut alimenter de façon symétrique au moins certains des modules propulsifs des deux groupes propulsifs.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1a schématise une architecture connue.
La figure 1b schématise une architecture connue.
La figure 2a schématise et illustre une architecture conforme à un mode de réalisation de l'invention.
La figure 2b schématise et illustre une architecture conforme à un mode de réalisation de l'invention.
La figure 3a illustre un montage possible sur un aéronef du groupe propulsif selon un mode de réalisation de l'invention.
La figure 3b illustre un montage possible sur un aéronef du groupe propulsif selon un mode de réalisation de l'invention.
La figure 3c illustre un montage possible sur un aéronef du groupe propulsif selon un mode de réalisation de l'invention.
La figure 4a illustre un mode de réalisation possible pour un module propulsif selon un mode de réalisation de l'invention.
La figure 4b illustre un mode de réalisation possible pour un module propulsif selon un mode de réalisation de l'invention.
La figure 5 illustre un mode de réalisation d'une turbine centripète.

### DESCRIPTION DETAILLEE

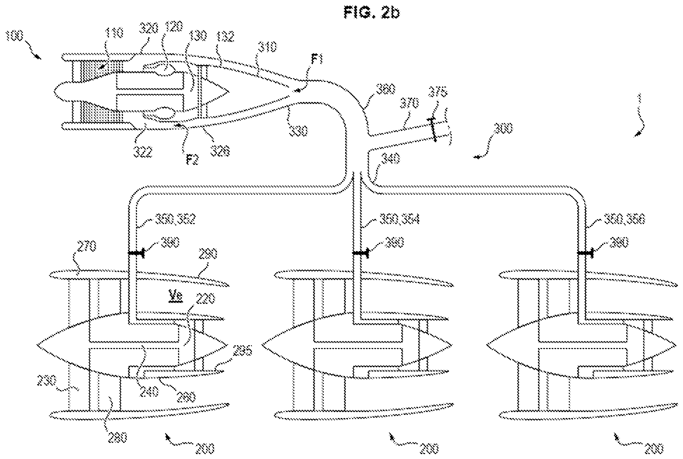

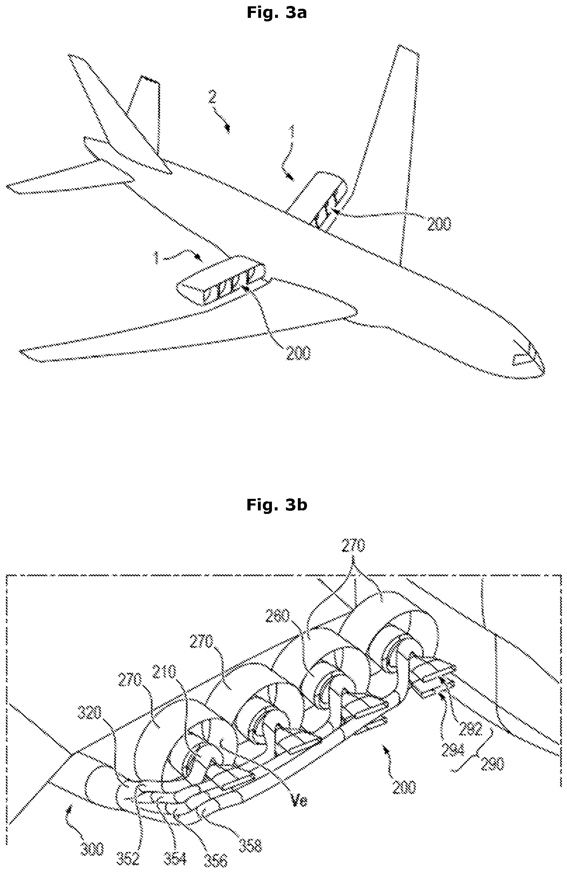

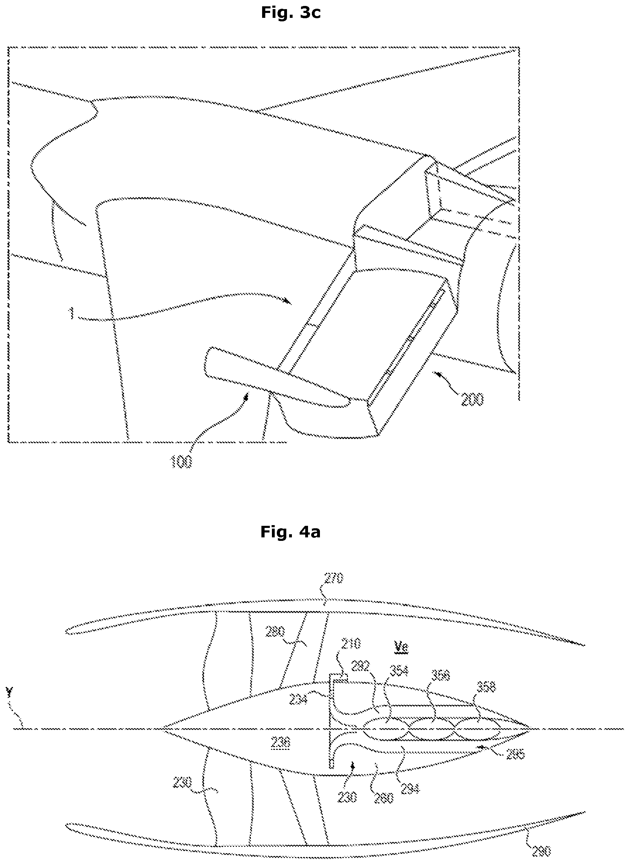

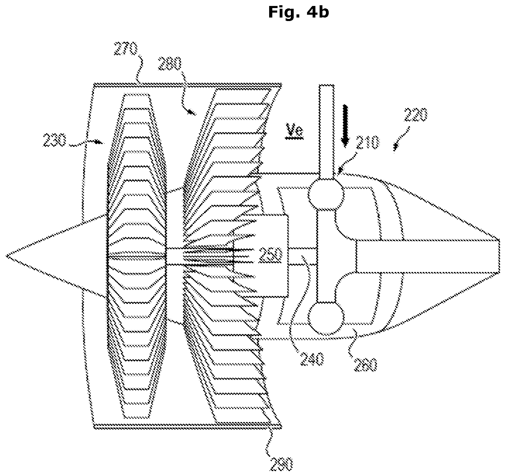

En référence aux **figures 2a** **et** **2b****,** un groupe propulsif 1 selon un mode de réalisation va être décrit. Ce groupe propulsif 1 est intégrable sur un aéronef (à voilure fixe), comme illustré sur les **figures 3a, 3b** **3c****.** Par ailleurs, un module propulsif à air comprimé, utilisable de façon préférée dans le groupe propulsif, sera présenté en lien avec les **figures 4a****,** **4b****.**

Le groupe propulsif 1 comprend une génératrice de gaz 100, configurée pour générer des gaz comprimés, et une pluralité de modules propulsifs à gaz comprimé 200, configurée pour être entraîné en rotation par les gaz comprimés issus de la génératrice de gaz 100. La génératrice de gaz 100 et les modules propulsifs 200 sont reliées pneumatiquement par un collecteur 300 (qui inclut un ensemble de tuyauterie et/ou valves et autres moyens de contrôle de débit) permettant de faire transiter de l'air comprimé. Par abus de langage, on parlera d'air comprimé, alors qu'il s'agit en réalité d'un mélange gazeux comprenant d'autres molécules que celles constituant normalement l'air (notamment celles issues de la combustion du carburant). L'air comprimé fonctionne ici comme un fluide de travail, pour transmettre de l'énergie entre la génératrice de gaz 100 et les modules propulsifs 200.

Les modules propulsifs 200 sont alimentés en parallèle par la génératrice de gaz 100. Les avantages connus d'un tel groupe propulsif 1 ont été détaillé en introduction.

Le nombre de modules propulsifs 200 varie entre deux et plus de quatre, en fonction du dimensionnement de la génératrice de gaz 100 et des modules propulsifs 200.

### La génératrice de gaz

La génératrice de gaz 100 comprend classiquement, dans le sens d'écoulement du flux d'air, un compresseur 110, une chambre de combustion 120 puis une turbine 130. La turbine 130 est relié au compresseur 110 par un arbre (non illustré), pour former un « corps » Le compresseur 110 reçoit de l'air à la pression totale extérieure et le comprime pour l'injecter dans la chambre de combustion 120 où il est mélangé avec le carburant puis enflammé. Les gaz de combustion s'échappent par la turbine 130, où ils se détendent, entraînant cette dernière en rotation autour d'un axe longitudinal Y. Une tuyère d'échappement 132 permet de canaliser le flux sortant.

Dans une variante préférentielle, la génératrice de gaz 1 est double-corps ou triple-corps.

Le compresseur 110 comprend alors plusieurs sections de compression 112, 114 (deux sur la **figure 2a****).** On distingue de façon connue en amont la section de compression 112 appelé compresseur basse-pression (ou booster) et en aval la section de compression 114 appelée compresseur haute-pression. Chaque section de compression 112, 114 est elle-même formée par plusieurs étages de compression.

De la même façon, la turbine 130 comprend alors plusieurs sections, dont notamment une turbine basse pression et une turbine haute pression (non illustrée), entraînant respectivement le compresseur basse pression 112 et le compresseur haute pression 114 au travers d'arbres de transmission dédiés et concentriques. On parle alors de corps basse-pression, de corps haute-pression, voire de corps intermédiaire.

Toutefois, dans une variante, la génératrice de gaz 1 est monocorps (un seul corps tournant, c'est-à-dire un seul compresseur, une seule turbine, un seul arbre).

Le taux de compression est exprimé comme le ratio des pressions totales entre les sections d'entrée et de sortie dudit compresseur, mesurées sur un point de fonctionnement correspondant au maximum de puissance propulsive obtenu au point statique (Mach nul) sol (altitude nulle). A titre d'exemple, dans la variante monocorps, ce taux de compression peut être compris entre 10 et 15. A titre d'exemple, dans la variante bicorps, le compresseur basse pression 112 peut avoir un taux de compression compris entre 3 et 10 et le compresseur haute pression 114 peut avoir un taux de compression compris entre 5 et 20.

La température en entrée de la turbine 130 est généralement comprise entre 1600 et 1900 K.

Afin de générer des gaz sous pression, la turbine 130 ne détend pas jusqu'à une pression atmosphérique mais jusqu'à une pression minimale de quelques bars. Par exemple, la turbine 130 (ou sa dernière section, ou le dernier étage de la section de la turbine) détend jusqu'à une pression au moins égale à 4, 5 ou 6 bars (400000, 500000, ou 600000 Pa)) (pour le point de fonctionnement puissance propulsive maximale point statique sol décrit plus haut). En effet, la dernière détente doit s'effectuer dans le module propulsif 200. Typiquement, la pression est entre 4 et 8 bars (400000 - 800000 Pa).

Le taux de détente de la turbine reste supérieur à trois toutefois.

La génératrice de gaz 100 peut être une génératrice simple flux ou double flux. Le double flux peut être réalisé soit avec une soufflante en amont de deux veines (une veine primaire comprenant le compresseur 110, la chambre de combustion 120 et la turbine 130, et une veine secondaire entourant la veine primaire), soit avec un compresseur basse pression 112 en amont de deux veines (la veine primaire comprenant le compresseur haute pression 114, la chambre de combustion 120 et la turbine 130, et une veine secondaire entourant la veine primaire). Il s'agit respectivement de turbomachine à double flux à fort taux de dilution ou faible taux de dilution. On fait ici la distinction entre une soufflante et un compresseur BP (ce dernier comprenant généralement plusieurs étages alors que la soufflante ne contient qu'un seul étage).

Dans une variante préférentielle, la génératrice de gaz 100 n'a pas de fonction propulsive : elle sert simplement à générer des gaz sous pression.

Alternativement, la génératrice de gaz 100 peut avoir une fonction propulsive, via la valorisation d'une partie des gaz issus de la turbine 130 au travers d'une tuyère à vocation propulsive.

### Le module propulsif à air comprimé

Illustré en **figures 4a** **et** **4b****,** le module propulsif à air comprimé 200 comprend une conduite d'entrée d'air comprimé 210 (qui reçoit l'air comprimé de la génératrice de gaz 100 via le collecteur 300), une turbine 220 et une soufflante 230. La turbine 220 entraîne en rotation la soufflante 230. On définit un axe longitudinal X de rotation pour la turbine 220 et la soufflante 230.

La pluralité de modules propulsifs à air comprimé 220 a donc des axes longitudinaux X distincts. Pour des raisons de poussées, ces axes longitudinaux X sont généralement parallèles (mais non confondus).

De la même façon, ces axes X des modules propulsifs 200 sont non confondus avec l'axe longitudinal Y de la génératrice de gaz 100 (et, comme indiqué précédemment, chaque axe X n'est pas confondu avec un autre axe X).

Le module propulsif à air comprimé 200 sera détaillé par la suite.

### Le collecteur

Le collecteur 300 a pour fonction de prélever des flux d'air pour les conduire jusqu'aux modules propulsifs 200. Le collecteur 300 comprend deux admissions 310, 320, pour prélever deux flux d'air F1 et F2 différents de la génératrice de gaz 100.

La première admission 310 permet de prélever un flux d'air F1 ayant traversé la chambre de combustion 120 de la génératrice de gaz 100. En pratique, la première admission 310 récupère un flux d'air qui a traversé la turbine 130 et avantageusement elle le récupère en sortie de turbine 130. Préférablement, l'intégralité du flux d'air en sortie de turbine est prélevée par la première admission 310.

La deuxième admission 320 permet de prélever un flux d'air F2 n'ayant pas traversé la chambre de combustion 120 de la génératrice de gaz 100. Un tel flux F2 est appelé « flux dérivé ». Il existe à cet égard plusieurs variantes qui vont être détaillées.

En aval des admissions 310, 320 se trouve un mélangeur 330. Le mélangeur 330 est une portion du collecteur 300 au sein duquel les deux flux F1, F2 se mélangent. En sortie de mélangeur 330, la pression statique est homogène dans le collecteur 300. Le mélangeur 330 peut consister en une simple tuyauterie sans mécanisme particulier (par exemple deux canaux sensiblement concentriques qui deviennent un unique canal où les flux se mélangent, comme illustré en **figure 2b****).**

Avantageusement, le ratio (en débit massique) des flux F2-F1 est compris entre 1% et 50%, voire 1% et 30%. Cela se traduit par un bypass ratio compris entre 1 et 30%. Pour 100kg d'air par seconde du flux F1 (traversant la chambre de combustion), on a entre 1 et 30kg d'air par seconde du flux dérivé F2 (ne traversant pas la chambre de combustion). Formalisé selon la notation des taux de dilution, on a un ratio compris entre 1:100 et 30:100.

Le ratio peut avantageusement être compris entre 1:100 et 20:100. Selon un exemple, le ratio peut être situé autour de 1:10.

L'air qui alimente les modules propulsifs 200 est donc issu de deux sources distinctes. La première source, le flux F1, permet d'assurer la fourniture énergétique requise pour entraîner en rotation les propulseurs, avec une température et une pression élevées. La deuxième source, le flux dérivé F2, permet par mélange de faire baisser la température du flux F1 à une température plus acceptable pour le matériau du collecteur 300. Cela autorise donc une tuyauterie plus longue, plus légère et moins chère. On peut donc davantage déporter le positionnement des modules propulsifs 200 par rapport à la génératrice de gaz 100.

A titre d'exemple, la vitesse de l'écoulement dans le collecteur 300 est environ de 0,3Mach.

Dans un mode de réalisation, pour un avion de plus de 20t de masse à vide ou pour une poussée par ensemble propulsif de plus de 50kN, il y a plus de 5m de tuyauterie, ou bien plus de trois le diamètre de la soufflante 230 du module propulsif 200, entre la première admission 310 de la génératrice à gaz et l'entrée d'air 210 du module propulsif 200.

En aval du mélangeur 330, quand les deux flux F1, F2 sont mélangés, se trouve un diviseur 340 qui est configuré pour répartir le débit d'air entre les différents modules propulsifs 200. Le diviseur 340 est une portion du collecteur 300 à partir de laquelle ce dernier se divise en plusieurs branches 350, 352, 354, 356. Il peut consister en une simple tuyauterie. Chaque branche 352, 354, 356 est ensuite connectée à une entrée d'air 210 du module propulsif 200 que ladite branche alimente.

Entre le mélangeur 330 et le diviseur 340, un conduit de transmission 360 est prévu. Il s'agit d'une simple tuyauterie.

Dans une variante préférée, la deuxième admission 320 du collecteur 300 permet de prélever le flux dérivé F2 au niveau du compresseur 110, c'est-à-dire que l'air prélevé a été comprimé par le compresseur 11. En ce sens, la deuxième admission 320 peut ressembler structurellement à un prélèvement *bleed,* avec les valves dites VBV *(variable bleed valves).* Les valves VBV (et donc la deuxième admission 320) sont des valves positionnées dans la veine primaire et qui ont pour fonction d'évacuer une partie de l'air de la veine primaire pour évacuer des débits et/ou réguler la pression. Elles peuvent être ouvertes ou fermées afin de réguler la pression au niveau des compresseurs ou entre les compresseurs.

En **figure 2b****,** l'air est prélevé en sortie de compresseur 110, avant son entrée dans la chambre de combustion 120.

Lorsque le compresseur 110 comprend deux sections (compresseur basse pression 112 et haute pression 114, entraînés par des turbines respectivement basse pression et haute pression qui ne sont pas illustrées), la deuxième admission 320 du collecteur 300 prélève avantageusement le flux dérivé F2 entre les deux sections (plan 25 selon la nomenclature classique).

Avantageusement, le prélèvement, c'est-à-dire l'emplacement da la deuxième admission 321, se fait à un niveau (ou un étage) du compresseur 110 où la pression est identique ou sensiblement identique à celle en sortie de turbine 130. Cela permet un mélange des flux F1, F2 homogène en limitant les perturbations.

La deuxième admission 320 peut prendre la forme d'un anneau 322 qui se distribue ensuite en une pluralité de canaux 326 qui emmènent le flux F1 vers l'écoulement issue de la turbine 130, pour effectuer le mélange. Des écopes peuvent être prévues.

Alternativement, une double paroi s'étend sur une portion angulaire pour faire office de bouclier thermique aux parties chaudes (chambre de combustion 120, turbine 130). Il s'agit alors de canaux annulaires étendus selon une direction annulaire.

Le flux dérivé F2 s'écoule préférablement le long du carter interne de la génératrice à gaz 100 (voir **figure 2b**) pour limiter les pertes de charges. Les canaux 326 viennent ensuite entourer la tuyère 132, qui fait office de première admission 310. Les flux F1 et F2 se mélangent ensuite dans le mélangeur 330.

Dans cette variante, la génératrice de gaz 100 est avantageusement monoflux (par opposition aux turbomachines double flux - le flux dérivé F2 n'étant pas considéré ici comme un flux dans ce sens-là). Le flux dérivé F2, à l'intérieur des canaux 326 et longeant la chambre de combustion 120 permet de refroidir cette dernière.

Dans une autre variante non illustrée, la génératrice à gaz 100 est une turbomachine à double flux : deux flux concentriques dont le flux primaire ou flux chaud qui traverse toute la génératrice de gaz en passant par le ou les compresseurs (basse pression puis haute pression), les chambres de combustion et la ou les turbines (haute pression puis basse pression), et dont le flux secondaire ou flux froid qui contourne au moins le compresseur haute pression, les chambres de combustion, et la ou les turbines. Les deux flux se rejoignent et se mélangent dans le collecteur. Plus spécifiquement, la deuxième admission 320 du collecteur permet de prélever un flux dérivé au niveau d'une veine secondaire. Préférablement, seule une fraction du flux secondaire est envoyée vers le flux dérivé (pas l'intégralité).

La deuxième admission peut prendre la forme la forme d'un anneau avec écope par exemple, qui se distribue ensuite en une pluralité de canaux annulaires, positionnés entre la veine primaire et la veine secondaire. Les canaux emmènent ensuite le flux dérivé F2 vers la veine primaire, en sortie de turbine, pour effectuer le mélange.

Alternativement, une double paroi s'étend sur une portion angulaire pour faire office de bouclier thermique aux parties chaudes (chambre de combustion, turbine). Il s'agit alors de canaux annulaires étendus.

Le flux s'écoule préférablement le long du carter interne de la génératrice à gaz (voir **figure 2b****)** pour limiter les pertes de charges. Le canal annulaire vient ensuite entourer la tuyère, qui fait office de première admission. Les flux F1 et F2 se mélangent ensuite dans le mélangeur. Dans une turbomachine à faible taux de dilution (inférieur à 1:1), la séparation entre une veine primaire (avec le compresseur haute pression 114, la chambre de combustion 120 et la turbine 130) et la veine secondaire se fait en aval du compresseur basse pression 112.

Dans une turbomachine à fort taux de dilution (supérieur à 5:1), la séparation entre une veine primaire (avec le compresseur 110 - le cas échéant les compresseurs basse pression 112 et le compresseur haute pression 114, la chambre de combustion 120 et la turbine 130) et la veine secondaire se fait en aval d'une soufflante, entraîné en rotation par la turbine basse pression (éventuellement via un réducteur mécanique - par exemple un train épicycloïdal).

Il ne faut pas confondre ici le ratio de bypass des flux F1 et F2 avec le taux de dilution classiquement défini pour une turbomachine double flux. Les flux du taux de dilution classiquement défini sont immédiatement relâchés à l'air libre. Le ratio F1/F2 n'est pas un taux de dilution. Dans le cadre de l'ensemble propulsif 1, le taux de dilution correspond au débit massique d'air traversant les soufflantes 230 des modules propulsifs 200 sur le débit massique du flux F1.

Enfin, le flux dérivé F2 est prélevé dans un air qui a traversé la soufflante et qui a donc été légèrement comprimé (ce qui signifie que la soufflante est lui aussi un compresseur). Pour des raisons de clarté, on distingue cette variante de la variante de la **figure 2b****,** avec le monocorps.

Dans une autre variante non illustrée, la deuxième admission 320 permet de prélever un flux F2 dans un flux directement issu de l'air libre.

Le collecteur 300 a pour fonction de prélever les flux F1 et F2 mais aussi de les distribuer vers les différents modules propulsifs 200.

A cet égard, le diviseur 340 permet une division des flux. Toutefois, ce dernier peut ne pas être suffisant à cause des pertes engendrées par les distances et/ou les formes de la tuyauterie qui ne sont pas toujours identiques entre les différentes branches 352, 354, 356. Pour pallier cette difficulté, des moyens de contrôle de débit 390 dans les branches sont prévues, par exemple sous la forme de vannes de débit ou sous la forme de distributeur à géométrie variable ou calage variable (avec ailettes par exemple). Ces moyens de contrôle 390 sont positionnés dans les branches 352, 354, 356 ou dans les conduits d'entrée d'air 210, voire directement au niveau des turbines 220.

De plus, ces moyens de contrôle de débit 390 permettent d'ajuster le régime de fonctionnement du groupe propulsif 1. A régime faible ou partiel, la restriction de débit à un nombre limité de modules propulsifs 200 permet d'obtenir une combinaison aérodynamique avantageuse permettant de n'avoir que des modules propulsifs 200 fonctionnant toujours proche de leur point de dessin aérodynamique optimum. Les autres modules propulsifs 200 basculent alors en mode drapeau (*windmilling* en terminologie anglo-saxonne) et génèrent une traînée minimale.

Le collecteur 300 peut être réalisé en différents matériaux, en fonction de la température de gaz. Du fait de la température plus faible que celle en sortie de turbine, la tuyauterie du collecteur 300 peut être en Inconel^{®} (superalliage à base de Nickel et de fer), en céramique, en composite à matrice céramique (CMC) Oxyde/Oxyde, ce qui convient pour des températures d'environ 800° et des pressions de 4 à 8 bars (400000 - 800000 Pa).

La fabrication peut être faite par tronçon avec un moule clé pour garantir une faible rugosité des parois internes.

Lorsque plusieurs groupes propulsifs 1 sont montés sur un aéronef (voir ci-dessous par exemple, **figure 3a****),** il peut être utile de les relier pneumatiquement, afin que l'un puisse pallier une défaillance de l'autre - en particulier si une génératrice de gaz 100 est défaillante. A cet égard, une conduite de croisement 370 peut être prévue (appelée « *crossover* »), illustrée en **figure 2b****.** Cette dernière interconnecte les deux conduits de transmission 360 des groupes propulsifs 1 respectifs (ou certaines branches 350, 352, 354, 356, pour un fonctionnement croisé uniquement vers certains modules propulsifs 220). Une vanne 375 est avantageusement positionnée dans la conduite de croisement 370 pour piloter la répartition des débits entre les deux groupes propulsifs 1. Dans un mode de réalisation, en cas de défaillance d'un groupe propulsif, l'autre groupe propulsif peut répartir son débit sur un nombre x de modules propulsifs 220, x étant comprend entre 1 et n avec n le nombre total de modules propulsifs montés sur un aéronef. De plus, la répartition se fait préférablement symétriquement sur les modules propulsifs 220 des groupes propulsifs.

Ainsi, la génératrice de gaz du premier groupe propulsif peut alimenter totalement ou partiellement en air comprimé les modules propulsifs du deuxième groupe propulsif - et vice versa.

La vanne 375 est avantageusement pilotée par une unité de contrôle, telle qu'un FADEC (non illustré) ou sur instructions du pilote.

### L'aéronef

Le groupe propulsif 1 peut être monté sur l'aéronef 2. Plus précisément, deux groupes propulsifs 1 peuvent être montés sur chaque aile de l'aéronef 2 ou de chaque côté du fuselage (en aval des ailes, comme illustré en **figures 3a ou 3b****).**

Dans l'exemple illustré, une génératrice de gaz 100 alimente quatre modules propulsifs 200 en parallèle. Le collecteur 300 se divise donc au niveau du diviseur 340 en quatre conduits 352, 354, 356, 358, chacun conduisant vers un module propulsif 200.

Un montage particulier du groupe propulsif est décrit dans une demande du même déposant et datée du même jour.

### Le module propulsif à air comprimé (figures 4a et 4b)

La turbine 220 entraîne en rotation la soufflante 230 via un arbre 240. Un réducteur 250 peut être intercalé entre les deux, afin de limiter la vitesse de rotation de la soufflante 230 dont l'extrémité des pales produit du bruit lorsqu'une vitesse supersonique est atteinte. Le réducteur est par exemple mécanique et intègre un train épicycloïdal.

A titre d'exemple, le réducteur a un rapport de réduction compris entre 4 et 10.

La soufflante 230 a typiquement un diamètre de dimension inférieure à un diamètre compris entre 50cm et 150cm.

Dans une variante préférentielle, la turbine 220 est une turbine à alimentation radiale. La turbine à alimentation radiale 220 reçoit de l'air comprimé selon une direction radiale par rapport à la direction de rotation de la turbine.

Une telle turbine permet de diminuer l'encombrement longitudinal, tout en ayant une distribution latérale commode. De plus, ce type de turbine est adaptée aux vitesses de rotation de la soufflante 230 (le réducteur 250, si présent, peut être plus petit). Il est alors plus facile d'implémenter une pluralité de modules propulsifs sur un aéronef (quatre par côté par exemple).

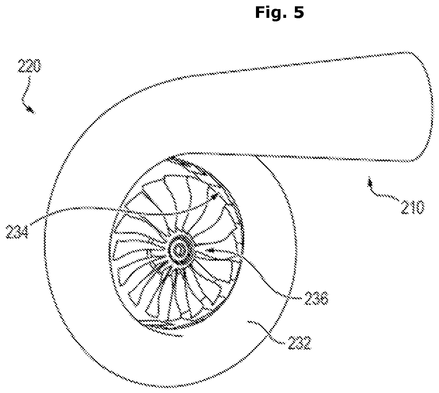

Plus précisément, la turbine à alimentation radiale 230 est une turbine radiale centripète comme illustrée en **figure 5****,** c'est-à-dire que le flux d'air subit une modification non axiale de sa direction principale d'écoulement, en se rapprochant de l'axe de rotation X de la turbine.

La turbine 230 comprend préférablement une volute 232 dont le but est d'accélérer le débit d'air comprimé. Un distributeur 234, en extrémité de la volute 232, distribue ensuite l'air sur une roue mobile en rotation 236, solidaire de l'arbre 240.

Le distributeur 234 comprend typiquement des aubes (les références 234 désignent les aubes en réalité). Ces aubes peuvent être fixes, à calage variable ou à géométrie variable (et pilotés par une unité de contrôle telle qu'un FADEC ou sur instructions du pilote). Dans les deux derniers cas, ces distributeurs peuvent faire partie des moyens de contrôle de débit 390, ou bien constituer des moyens de contrôle additionnel, destiné à optimiser le fonctionnement propre du module propulsif 200 plutôt qu'à gérer les propriétés globales du groupe propulsif 1.

Le module propulsif 200 comprend un carter interne 260, qui loge la turbine 220, l'arbre 240 et le réducteur 250 le cas échéant. Autour, le module propulsif 200 comprend un carter de la soufflante 270. Le volume entre le carter de la soufflante 270 et le carter interne 260 définit une veine d'écoulement Ve, à l'entrée de laquelle se trouve la soufflante 230. Des redresseurs 280 (une couronne d'aube de redresseur par exemple, appelé *outlet guide vanes, OGV*) sont disposés dans la veine d'écoulement, en aval de la soufflante 230, pour redresser le flux d'air avant son échappement. Ces redresseurs 280 ont aussi généralement une fonction de poutre pour reprendre les efforts et porter le carter interne.

Une tuyère de sortie 290 peut être prévue, par exemple une tuyère à section variable (*variable area fan nozzle, VAFN*), pour éjecter le flux traversant la soufflante 230. Des inverseurs de poussée peuvent aussi être prévus (à grille ou autre, faisant partie du VAFN ou non, etc.).

Dans l'agencement illustré sur les **figures 3a, 3b** **et** **3c****,** en fonction du positionnement du turbofan 200, ce dernier peut accueillir dans son carter 260 une portion des branches 354, 356 conduisant aux conduites d'entrées d'air 210 respectives du ou des modules propulsifs 200 adjacents, qui traversent transversalement à l'axe longitudinal Y ledit carter 260. Les branches 354, 356 traversent donc le carter 260 de part en part.

On trouve ainsi pour le module propulsif le plus proche de la génératrice de gaz trois portions des branches 354, 356 qui traversent le carter interne 260, pour le module propulsif adjacent 200 deux portions des branches 354, 356 et ainsi de suite.

De la même façon, les portions des branches 354, 356 des modules propulsifs plus éloignés traversent la veine d'écoulement Ve des modules propulsifs plus proches.

Le module propulsif 200 comprend en outre une tuyère d'échappement 295, dite « primaire », qui permet au gaz traversant la turbine 220 de s'échapper dans l'atmosphère et de contribuer à l'effort propulsif global. Cette tuyère d'échappement 290 est formée en deux bifurcations 292, 294, typiquement parallèle, en aval de la turbine 220 afin d'y accommoder le passage transversal des conduites d'entrées d'air 210 des autres modules propulsifs 200. A cet égard, les deux bifurcations 292, 294 s'étendent de part et d'autre des conduites d'entrées d'air 210 (si les entrées d'air 210 s'étendent horizontalement, les bifurcations 292, 294 s'étendent au-dessus et au-dessous).

### Quelques exemples de valeurs

Le groupe propulsif 1 à un rendement raisonnable pour une masse raisonnable, sans recourir à des technologies complexes. Le gain de SFC (*spécifie fuel consumption*), c'est dire de consommation de carburant par rapport à sa puissance, peut être de 30% en décollage (à Mach 0,25) et de 10% en conditions de croisière (à Mach 0.78) par rapport à une turbomachine double corps double flux sous l'aile présentant une poussée identique et un niveau technologique comparable.

Le taux de dilution du groupe propulsif (qui est différent du taux de bypass mentionnée pour la génératrice à gaz), c'est dire le ratio de la somme des débits massiques traversant les soufflantes 230 des modules propulsifs 200 sur le débit massique de la génératrice de gaz 100 est supérieur à 20 :1 (de 26 :1 à 35 :1 en décollage et de 30 :1 à 40 :1 en croisière).

Les taux de compression des soufflantes 230 des modules propulsifs 200 est sensiblement de 1,15 au décollage et de 1,26 en croisière.

Dans un exemple de dimensionnement autorisant une puissance semblable à celle d'une turbomachine avec une poussée au décollage de plus de 370 kN et un consommation spécifique en fuel inférieure à 0,29 kg/DaN.h, le compresseur basse pression a un taux de 6, le compresseur haute pression à un taux de 8,3, la chambre de combustion une température de 1700K, le ratio de bypass des flux F1 et F2 et de 1 :10, la pression dans le collecteur est de 6,74atm, pour une température de 1053K et un débit massique de 110kg/s, pour alimenter quatre modules propulsifs dont le taux de compression de la soufflante est 1,15.

## Revendications

1. Groupe propulsif (1) comprenant :
une génératrice de gaz (100) comprenant :
un compresseur (110),
une chambre de combustion (120), configurée pour recevoir de l'air comprimé par le compresseur (110),
une turbine (130), configurée pour entraîner en rotation le compresseur à l'aide des gaz issus de la chambre de combustion (120), au moins deux modules propulsifs à air comprimé (200), chaque module propulsif comprenant :
une soufflante (230),
une turbine à air comprimé (220), configurée pour entraîner en rotation la soufflante (230),
un collecteur (300) permettant d'alimenter en air comprimé les turbines (220) respectives des modules propulsifs à air comprimé (200),
le collecteur (300) étant configuré pour récupérer et mélanger :
au moins une portion du flux (F1) ayant traversé la chambre de combustion (120) de la génératrice de gaz (100), typiquement en sortie de turbine (130), et
au moins un flux dérivé (F2), ledit flux dérivé (F2) étant un flux d'air qui n'a pas traversé la chambre de combustion (120) de la génératrice de gaz (100) et **caractérisé en ce que** le collecteur (300) ou les modules propulsifs (200) comprennent des moyens de contrôle de débit (390) pour contrôler l'alimentation respective des modules propulsifs (200) en air comprimé.

2. Groupe propulsif (1) selon la revendication 1, dans lequel la génératrice de gaz (100) comprend un axe longitudinal (Y) correspondant à un axe de rotation de la turbine (130) et chaque module propulsif (200) comprend un axe longitudinal (X) correspondant à un axe de rotation de la turbine à air comprimé (220), dont au moins un des axes longitudinaux (X) des modules propulsifs (200) n'est pas confondus avec l'axe longitudinal de la génératrice de gaz (Y), préférablement tous.

3. Groupe propulsif (1) selon l'une quelconque des revendications précédentes, dans lequel le collecteur (300) récupère quasiment l'intégralité ou l'intégralité du flux (F1) traversant la turbine (130) de la génératrice de gaz (100).

4. Groupe propulsif (1) selon l'une quelconque des revendications 1 à 3, dans lequel le collecteur (300) permet de mélanger un flux ayant traversé la turbine (130) de la génératrice de gaz et un flux dérivé (F2) au niveau du compresseur (110) de la génératrice de gaz (100).

5. Groupe propulsif (1) selon la revendication 4, dans lequel le flux dérivé (F2) est prélevé à un étage du compresseur présentant une pression équivalente à la pression en sortie de turbine (130).

6. Groupe propulsif (1) selon l'une quelconque des revendications 1 à 3, dans lequel la génératrice de gaz (100) est une turbomachine double flux comprenant une soufflante en aval de laquelle se trouve une veine secondaire et une veine primaire, la veine primaire intégrant le compresseur (110), la chambre de combustion (120) et la turbine (130), dans lequel le flux dérivé (F2) est prélevé dans la veine secondaire.

7. Groupe propulsif (1) selon l'une quelconque des revendications 1 à 4, dans lequel la génératrice de gaz (100) est une turbomachine double flux double corps dans lequel le compresseur (110) comprend un compresseur basse pression (112) et un compresseur haute pression (114), et dans lequel une veine secondaire et une veine primaire sont définies en aval du compresseur basse pression (112), la veine primaire intégrant la chambre de combustion et la turbine (130), dans lequel le flux dérivé (F2) est prélevé dans la veine secondaire.

8. Groupe propulsif (1) selon l'une quelconque des revendications 1 à 3, dans lequel le flux dérivé (F2) est un flux directement issu de l'air libre.

9. Groupe propulsif (1) selon l'une quelconque des revendications 1 à 8, dans lequel la turbine (130) est configurée pour détendre l'air en sortie à une pression supérieure à 4 bars.

10. Groupe propulsif (1) selon l'une quelconque des revendications précédentes, dans lequel la turbine à air comprimé (220) du module propulsif (200) est une turbine radiale, préférablement centripète.

11. Groupe propulsif (1) selon l'une quelconque des revendications précédentes, dans lequel les moyens de contrôle de débit (390) comprennent des vannes ou des distributeurs à calage variable ou à géométrie variable.

12. Ensemble comprenant deux groupes propulsifs (1) selon l'une quelconque des revendications 1 à 11, et une conduite de croisement (370), ladite conduite interconnectant pneumatiquement les deux collecteurs (300) afin que la génératrice à gaz du premier groupe propulsif, respectivement le deuxième, puisse alimenter en air comprimé au moins un module propulsif (200) du deuxième groupe propulsif, respectivement le premier.

## Patentansprüche

1. Antriebsgruppe (1), umfassend:
einen Gasgenerator (100), der umfasst:
einen Kompressor (110),
eine Brennkammer (120), die ausgelegt ist, um Druckluft vom Kompressor (110) zu empfangen,
eine Turbine (130), die ausgelegt ist, um den Kompressor mit Hilfe der Gase aus der Brennkammer (120) in Drehung zu versetzen,
mindestens zwei Druckluft-Antriebsmodule (200), wobei jedes Antriebsmodul umfasst:
ein Gebläse (230),
eine Druckluftturbine (220), die ausgelegt ist, um das Gebläse (230) in Drehung zu versetzen,
einen Sammler (300), der es ermöglicht, die jeweiligen Turbinen (220) der Druckluft-Antriebsmodule (200) mit Druckluft zu versorgen,
wobei der Sammler (300) ausgelegt ist, um zurückzugewinnen und zu mischen:
mindestens einen Teil des Stroms (F1), der die Brennkammer (120) des Gasgenerators (100) durchquert hat, typischerweise am Ausgang der Turbine (130), und
mindestens einen Nebenstrom (F2), wobei der Nebenstrom (F2) ein Luftstrom ist, der die Brennkammer (120) des Gasgenerators (100) nicht durchquert hat,
und **dadurch gekennzeichnet, dass** der Sammler (300) oder die Antriebsmodule (200) Durchflusssteuerungsmittel (390) umfassen, um die jeweilige Versorgung der Antriebsmodule (200) mit Druckluft zu steuern.

2. Antriebsgruppe (1) nach Anspruch 1, wobei der Gasgenerator (100) eine Längsachse (Y) umfasst, die einer Drehachse der Turbine (130) entspricht, und jedes Antriebsmodul (200) eine Längsachse (X) umfasst, die einer Drehachse der Druckluftturbine (220) entspricht, wobei mindestens eine der Längsachsen (X) der Antriebsmodule (200) nicht mit der Längsachse des Gasgenerators (Y) zusammenfällt, vorzugsweise alle.

3. Antriebsgruppe (1) nach einem der vorhergehenden Ansprüche, wobei der Sammler (300) nahezu den gesamten oder den gesamten Strom (F1), der die Turbine (130) des Gasgenerators (100) durchquert, zurückgewinnt.

4. Antriebsgruppe (1) nach einem der Ansprüche 1 bis 3, wobei es der Sammler (300) gestattet, einen Strom, der die Turbine (130) des Gasgenerators durchquert hat, und einen Nebenstrom (F2) im Bereich des Kompressors (110) des Gasgenerators (100) zu mischen.

5. Antriebsgruppe (1) nach Anspruch 4, wobei der Nebenstrom (F2) auf einer Stufe des Kompressors entnommen wird, die einen Druck aufweist, der dem Druck am Ausgang der Turbine (130) entspricht.

6. Antriebsgruppe (1) nach einem der Ansprüche 1 bis 3, wobei der Gasgenerator (100) eine Doppelstrom-Turbomaschine ist, die eine Gebläse umfasst, nach dem sich ein Sekundärkanal und ein Primärkanal befinden, wobei der Primärkanal den Kompressor (110), die Brennkammer (120) und die Turbine (130) integriert, wobei der Nebenstrom (F2) aus dem Sekundärkanal entnommen wird.

7. Antriebsgruppe (1) nach einem der Ansprüche 1 bis 4, wobei der Gasgenerator (100) eine Doppelstrom-Doppelkörper-Turbomaschine ist, wobei der Kompressor (110) einen Niederdruckkompressor (112) und einen Hochdruckkompressor (114) umfasst, und wobei stromabwärts des Niederdruckkompressors (112) ein Sekundärkanal und ein Primärkanal definiert sind, wobei der Primärkanal die Brennkammer und die Turbine (130) integriert, wobei der Nebenstrom (F2) aus dem Sekundärkanal entnommen wird.

8. Antriebsgruppe (1) nach einem der Ansprüche 1 bis 3, wobei der Nebenstrom (F2) ein direkt aus der freien Luft stammender Strom ist.

9. Antriebsgruppe (1) nach einem der Ansprüche 1 bis 8, wobei die Turbine (130) ausgelegt ist, um die ausströmende Luft auf einen Druck von über 4 bar zu entspannen.

10. Antriebsgruppe (1) nach einem der vorhergehenden Ansprüche, wobei die Druckluftturbine (220) des Antriebsmoduls (200) eine Radialturbine, vorzugsweise eine Zentripetalturbine, ist.

11. Antriebsgruppe (1) nach einem der vorhergehenden Ansprüche, wobei die Mittel zur Steuerung des Durchflusses (390) Ventile oder Verteiler mit variabler Einstellung oder variabler Geometrie umfassen.

12. Anordnung mit zwei Antriebsgruppen (1) nach einem der Ansprüche 1 bis 11 und einer Kreuzungsleitung (370), wobei die Leitung die beiden Sammler (300) pneumatisch miteinander verbindet, damit der Gasgenerator der ersten Antriebsgruppe bzw. die zweite mindestens ein Antriebsmodul (200) der zweiten Antriebsgruppe bzw. die erste mit Druckluft versorgen kann.

## Claims

1. A propulsion unit (1) comprising:
- a gas generator (100) comprising:
a compressor (110),
a combustion chamber (120), configured to receive compressed air by the compressor (110),
a turbine (130), configured to rotationally drive the compressor using the gases coming from the combustion chamber (120),
- at least two compressed-air propulsion modules (200), each propulsion module comprising:
a fan (230),
a compressed-air turbine (220), configured to rotationally drive the fan (230),
- a manifold (300) used to supply compressed air to the respective turbines (220) of the compressed-air propulsion modules (200),
the manifold (300) being configured to collect and mix:
at least a portion of the flow (F1) that has crossed the combustion chamber (120) of the gas generator (100), typically at the outlet of the turbine (130), and
at least one bypass flow (F2), said bypass flow (F2) being an air flow which has not crossed the combustion chamber (120) of the gas generator (100)
and **characterized in that** the manifold (300) or the propulsion modules (200) comprise means (390) for controlling the flow rate to control the respective supply of the propulsion modules (200) with compressed air.

2. The propulsion unit (1) as claimed in claim 1, wherein the gas generator (100) comprises a longitudinal axis (Y) corresponding to an axis of rotation of the turbine (130) and each propulsion module (200) comprises a longitudinal axis (X) corresponding to an axis of rotation of the compressed-air turbine (220), whereof at least one of the longitudinal axes (X) of the propulsion modules (200) is not colinear with the longitudinal axis of the gas generator (Y), preferably all.

3. The propulsion unit (1) as claimed in any of the preceding claims, wherein the manifold (300) collects almost the entirety or collects the entirety of the flow (F1) crossing the turbine (130) of the gas generator (100).

4. The propulsion unit (1) as claimed in any of claims 1 to 3, wherein the manifold (300) allows mixing a flow having crossed the turbine (130) of the gas generator and a bypass flow (F2) at the level of the compressor (110) of the gas generator (100).

5. The propulsion unit (1) as claimed in claim 4, wherein the bypass flow (F2) is drawn at a stage of the compressor having a pressure equivalent to the pressure at the outlet of the turbine (130).

6. The propulsion unit (1) as claimed in any of claims 1 to 3, wherein the gas generator (100) is a bypass turbomachine comprising a fan downstream of which are a secondary path and a primary path, the primary path including the compressor (110), the combustion chamber (120) and the turbine (130), wherein the bypass flow (F2) is drawn from the secondary path.

7. The propulsion unit (1) as claimed in any of claims 1 to 4, wherein the gas generator (100) is a twin-spool bypass turbomachine wherein the compressor (110) comprises a low-pressure compressor (112) and a high-pressure compressor (114), and wherein a secondary path and a primary path are defined downstream of the low-pressure compressor (112), the primary path including the combustion chamber and the turbine (130), wherein the bypass flow (F2) is drawn off the secondary path.

8. The propulsion unit (1) as claimed in any of claims 1 to 3, wherein the bypass flow (F2) is a flow coming directly from outside air.

9. The propulsion unit (1) as claimed in any of claims 1 to 8, wherein the turbine (130) is configured to expand the air at the outlet to a pressure greater than 4 bars.

10. The propulsion unit (1) as claimed in any of the preceding claims, wherein the compressed-air turbine (220) of the propulsion module (200) is a radial feed turbine, preferably centripetal.

11. The propulsion unit (1) as claimed in any of the preceding claims, wherein the means (390) for controlling the flow rate comprise valves or nozzle guide vanes with variable pitch or variable geometry.

12. An assembly comprising two propulsion units (1) as claimed in any of claims 1 to 11, and a crossover duct (370), said duct pneumatically interconnecting the two manifolds (300) so that the gas generator of the first or second propulsion unit respectively can supply compressed air to at least one propulsion module (200) of the second or first propulsion unit respectively.
